# EUROPEAN PATENT APPLICATION

(11) **EP 3 476 703 A1**
(43) Date of publication of application: **01.05.2019**
(21) Application number: 18202767.2
(22) Date of filing: 26.10.2018
(51) Int. Cl.: B62H 5/06, B62K 19/32, B62K 11/04

(54) **HANDLEBAR LOCK DEVICE OF SADDLED VEHICLE**

(30) Priority: 31.10.2017 JP 2017210397
(71) Applicant: HONDA MOTOR CO., LTD., Tokyo 107-8556 (JP)
(72) Inventor: Sato, Yoshiyuki, Saitama, 351-0193 (JP); Hiramaru, Masayuki, Saitama, 351-0193 (JP)
(74) Representative: Beder, Jens

(57) **Abstract**

A handlebar lock device of a saddled vehicle configured to optimize an arrangement position and to improve convenience by forming a lock mechanism portion and a wireless communication portion integrally with each other is provided.

A lock mechanism portion (50) having a lock pin (51) driven by an actuator is arranged in a position behind a head pipe (11) and between an upper frame (12) and a lower frame (13) respectively extending rearward of a vehicle body from the head pipe (11). The lock mechanism portion (50) is provided integrally with a radio communication portion communicating over a radio between a portable wireless key and the radio communication portion. The lock pin (51) protruding from the lock mechanism portion (50) is engaged with a steering stem (34) through a through-hole (11a) formed in the head pipe (11) in order to prohibit swinging motion of the front wheel steering mechanism. The lock mechanism portion (50) is supported by a pair of right and left stay members extending rearward of the vehicle body from a position nearer a lateral side of the head pipe (11).

## Description

### Technical Field

The present invention relates to a handlebar lock device of a saddled vehicle, and especially relates to a handlebar lock device of a saddled vehicle including a lock mechanism portion activated by an actuator.

### Background Art

Recently, such a handlebar lock device has been known that in a saddled vehicle having a front wheel steered by a swingable steering handlebar, the steering handlebar is held in a unidirectionally swinging state during stopping of the vehicle. The handlebar lock device is configured to disable the steering handlebar from swinging by a lock pin or the like protruding/retracting from/into a body portion. More recently, such a configuration of the handlebar lock device is on the rise that the lock pin or the like is made to protrude/retract by an actuator, and also an operation command for the actuator is performed through wireless communication.

In JP 2000-190887 A, such a handlebar lock device is disclosed that a lock mechanism portion including a lock pin driven by an actuator is disposed behind a head pipe swingably pivotally supporting a steering handlebar of a motorcycle, and also a wireless communication portion for outputting a driving command to the lock mechanism portion is disposed forward of the head pipe. The handlebar lock device is configured to unlock a handlebar by inserting a card key into a holder provided in the vicinity of the wireless communication portion.

Also, in JP H06-092281 A, such a handlebar lock device is disclosed that a lock mechanism portion driven by an actuator is provided on a side of a steering handlebar of a motorcycle, and also a wireless communication portion for outputting a driving command to the lock mechanism portion is disposed below a seat behind a vehicle body. The handlebar lock device is configured to lock/unlock a handlebar by outputting a wireless command to the wireless communication portion through a portable wireless key.

### Summary of Invention

### Problem to be solved by Invention

However, in the handlebar lock device disclosed in each of JP 2000-190887 A and JP H06-092281 A, the lock mechanism portion and the wireless communication portion are disposed separately from each other. As a result, there are possibilities that an arrangement space for the entire handlebar lock device is likely to be increased, and also assemblability and maintainability are likely to be degraded.

In order to solve the problems of the above-described related art, an object of the present invention is to provide a handlebar lock device of a saddled vehicle configured to optimize an arrangement position and to improve convenience by forming a lock mechanism portion and a wireless communication portion integrally with each other.

### Means for Solving Problems

To achieve the afore-mentioned purpose, the present invention has a first feature in a handlebar lock device of a saddled vehicle applied to the saddled vehicle (1), the saddled vehicle (1) being configured in such a manner that a front wheel steering mechanism (A) including a front fork (3), and a top bridge (7) and a bottom bridge (8) respectively supporting the front fork (3) is swingably journaled to a head pipe (11) provided at a front end of a vehicle body frame (15), wherein a lock mechanism portion (50) having a lock pin (51) driven by an actuator (56) is arranged in a position behind the head pipe (11) and between an upper frame (12) and a lower frame (13) respectively extending rearward of a vehicle body from the head pipe (11).

The present invention has a second feature in that the lock mechanism portion (50) is provided integrally with a radio communication portion (57) communicating over a radio between a portable wireless key (70) and the radio communication portion (57).

The present invention has a third feature in that the handlebar lock device is configured to be locked and unlocked by manipulating the portable wireless key (70) in order to drive the lock pin (51) of the lock mechanism portion (50).

The present invention has a fourth feature in that the top bridge (7) and the bottom bridge (8) are respectively fixed to a steering stem (34), the head pipe (11) swingably pivotally supports the steering stem (34), and the lock pin (51) protruding from the lock mechanism portion (50) is configured to be engaged with the steering stem (34) through a through-hole (11a) formed in the head pipe (11) in order to prohibit swinging motion of the front wheel steering mechanism (A).

The present invention has a fifth feature in that the lock mechanism portion (50) is supported by a pair of right and left stay members (53) extending rearward of the vehicle body from a position nearer a lateral side of the head pipe (11).

The present invention has a sixth feature in that a seal member (52) is provided to cover a periphery of the through-hole (11a).

### Advantageous Effects of Invention

The first feature is in a handlebar lock device of a saddled vehicle applied to the saddled vehicle (1), the saddled vehicle (1) being configured in such a manner that a front wheel steering mechanism (A) including a front fork (3), and a top bridge (7) and a bottom bridge (8) respectively supporting the front fork (3) is swingably journaled to a head pipe (11) provided at a front end of a vehicle body frame (15), wherein a lock mechanism portion (50) having a lock pin (51) driven by an actuator (56) is arranged in a position behind the head pipe (11) and between an upper frame (12) and a lower frame (13) respectively extending rearward of a vehicle body from the head pipe (11). The lock mechanism portion is arranged in a position surrounded by the head pipe, the upper frame and the lower frame. For this reason, the lock mechanism portion can be protected from the outside, and also can be less visually recognized from the outside. Also, in comparison with a configuration that the lock mechanism portion is attached to a side of the front wheel steering mechanism, excellent steerability can be acquired without causing an increase in weight of the front wheel steering mechanism.

According to the second feature, the lock mechanism portion (50) is provided integrally with a radio communication portion (57) communicating over a radio between a portable wireless key (70) and the radio communication portion (57). Even when the lock mechanism portion is driven through radio communication, since the lock mechanism portion and the radio communication portion are formed integrally with each other, an increase in the arrangement space can be suppressed. As a result, the degree of freedom in layout of the vehicle body can be increased. Also, in comparison with the configuration that the lock mechanism portion and the radio communication portion are provided separately from each other, the assemblability and the maintainability can be improved.

According to the third feature, the handlebar lock device is configured to be locked and unlocked by manipulating the portable wireless key (70) in order to drive the lock pin (51) of the lock mechanism portion (50). The handlebar lock device can be locked and unlocked by manipulation of the portable wireless key without inserting a physical key into a key cylinder. For this reason, convenience and merchantability of the motorcycle can be increased.

According to the fourth feature, the top bridge (7) and the bottom bridge (8) are respectively fixed to a steering stem (34), the head pipe (11) swingably pivotally supports the steering stem (34), and the lock pin (51) protruding from the lock mechanism portion (50) is configured to be engaged with the steering stem (34) through a through-hole (11a) formed in the head pipe (11) in order to prohibit swinging motion of the front wheel steering mechanism (A). The swinging motion of the front wheel steering mechanism can be certainly locked.

According to the fifth feature, the lock mechanism portion (50) is supported by a pair of right and left stay members (53) extending rearward of the vehicle body from a position nearer a lateral side of the head pipe (11). The lock mechanism portion can be supported with high accuracy with respect to the head pipe.

According to the sixth feature, a seal member (52) is provided to cover a periphery of the through-hole (11a). The seal member is disposed between the lock pin and the through-hole. For this reason, water or the like can be prevented from intruding into the head pipe.

### Brief Description of Drawings

Fig. 1 is a right side view of a motorcycle applied with a handlebar lock device of a saddled vehicle.
Fig. 2 is an enlarged side view of a partial cross section around a head pipe of the motorcycle.
Fig. 3 is an enlarged side view around the head pipe 11.
Fig. 4 is a perspective view showing an arrangement structure of the first lock mechanism portion.
Fig. 5 is a plan view of a partial cross section showing a fixing structure for the first lock mechanism portion.
Fig. 6 is an arrangement configuration diagram of the second lock mechanism portion when the motorcycle 1 is viewed from a lower surface.
Fig. 7 is an arrangement configuration diagram of the second lock mechanism portion 60 when the motorcycle 1 is viewed from a front surface.
Fig. 8 is an arrangement configuration diagram around the top bridge 7 when viewed from a point of view of a rider.

### Description of Embodiments

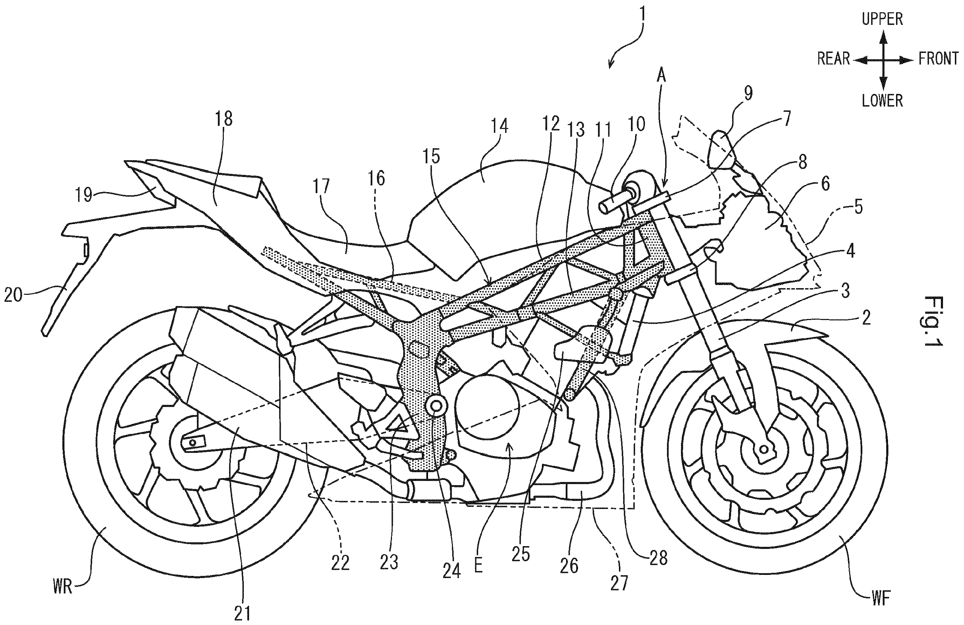

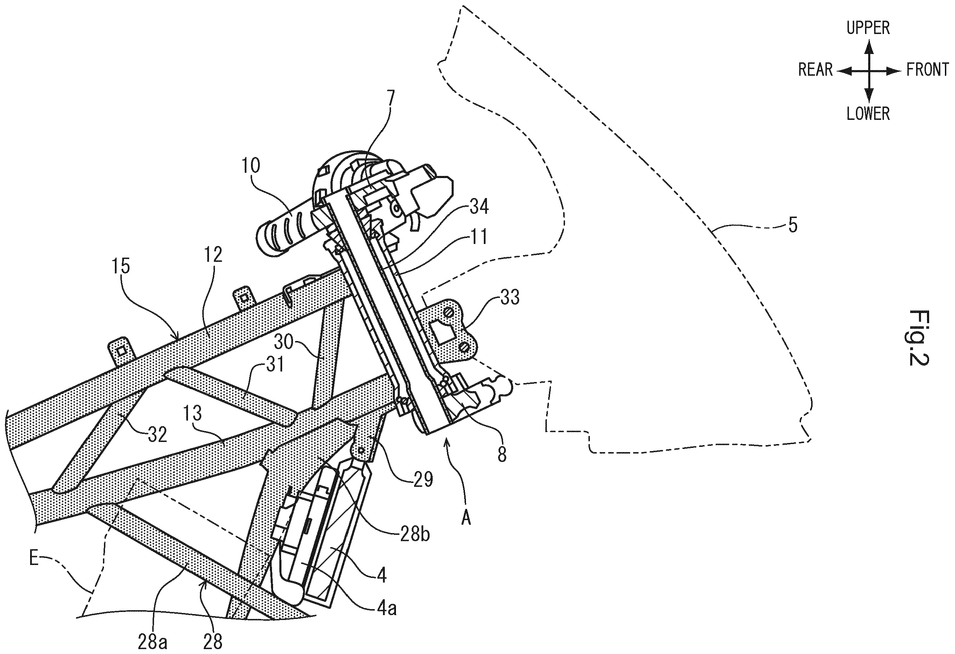

A preferable embodiment of the present invention will be detailedly described below with reference to drawings. Fig. 1 is a right side view of a motorcycle 1 applied with a handlebar lock device of a saddled vehicle according to the present embodiment. Also, Fig. 2 is an enlarged side view of a partial cross section around a head pipe 11 of the motorcycle 1.

A vehicle body frame 15 of the motorcycle 1 includes the head pipe 11 provided at a front end, a pair of right and left upper frames 12 extending rearward and downward of the vehicle body from a position nearer an upper portion of the head pipe 11, a pair of right and left lower frames 13 extending rearward and downward of the vehicle body from a position nearer a lower portion of the head pipe 11, a pair of right and left pivot plates 23 coupled to rear ends of the upper frames 12 and the lower frames 13 and supporting a pivot 24, a pair of right and left rear frames 16 extending rearward and upward from upper surfaces of the pivot plates 23 and the upper frames 12 and supporting a seat 17 or the like, and a pair of right and left hanger frames 28 extending downward from lower surfaces of the lower frames 13 and suspending an engine E or the like. The upper frames 12, the lower frames 13 and the rear frames 16 can be made up of steel pipes or the like having a circular cross section. The pivot plates 23 can be made up of a hollow structure or the like of press-molded steel plates.

A pair of right and left front forks 3 rotatably pivotally supporting a front wheel WF is supported by a top bridge 7 and a bottom bridge 8 arranged to sandwich the head pipe 11 from upper and lower sides. The top bridge 7 and the bottom bridge 8 are mutually fixed by a steering stem 34, and the steering stem 34 is journaled to the head pipe 11. Thereby, a front wheel steering mechanism A including the top bridge 7 and the bottom bridge 8 is steerably supported with respect to the head pipe 11. A steering handlebar 10 is attached to an upper portion of the top bridge 7, and a front fender 2 for covering an upper portion of the front wheel WF is fixed between the right and left front forks 3.

The pivot 24 supported by the pivot plates 23 swingably pivotally supports a front end of a swing arm 22 for rotatably pivotally supporting a rear wheel. The engine E is suspended below the vehicle body frame 15 by a plurality of hanger members provided to the pivot plates 23 and the hanger frames 28 provided forward of the vehicle body. An exhaust pipe 26 connected to a front surface of the engine E is connected to a muffler 21 provided rearward of the vehicle body through a lower portion of the engine E. A radiator 4 for cooling cooling water for the engine E is disposed in a position located forward and upward of the engine E and rearward and downward of the bottom bridge 8. A cooling water reservoir tank 25 is disposed in a position located rearward of the radiator 4 and on a right side of the engine E in a vehicle width direction.

A vehicle body front device 6 including a headlight and a meter device is attached to a front stay 33 provided to a vehicle body front portion of the head pipe 11. A pair of right and left rear view mirrors 9 is attached to a front cowl 5 for covering the vehicle body front device 6. A pair of right and left side cowls 27 for covering the vehicle body frame 15 and lateral portions of the engine E is disposed rearward of the front cowl 5. A fuel tank 14 and the seat 17 are disposed above the vehicle body frame 15. A rear cowl 18 and a rear fender 20 for supporting a tail lamp device 19 are attached behind the seat 17.

With reference to Fig. 2, a plurality of connecting pipes 30, 31, 32 for connecting the upper frames 12 and the lower frames 13 to each other are disposed between the upper frames 12 and the lower frames 13. The hanger frames 28 connected to the lower portions of the lower frames 13 are configured with first pipe portions 28a extending forward through a lateral side of the engine E from a rear side of the vehicle body, and second pipe portions 28b extending downward from a front side of the vehicle body. A radiator stay 29 for supporting an upper portion of the radiator 4 in a suspended manner is provided forward of the second pipe portions 28b. A cooling fan 4a driven by a motor is disposed at the rear of the radiator 4.

The handlebar lock device according to the present invention has a function of holding the front wheel steering mechanism A for steering the front wheel WF while being unidirectionally swung by a first lock mechanism portion and a second lock mechanism portion as will be described later. The front wheel steering mechanism A steers the front wheel WF. The handlebar lock device has a special feature in an arrangement structure.

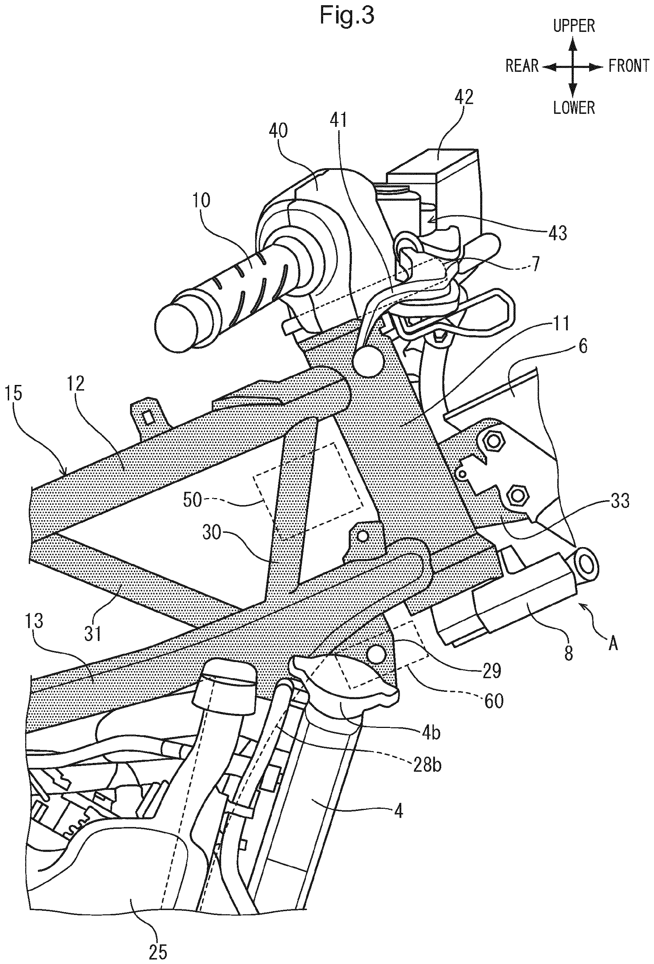

Fig. 3 is an enlarged side view around the head pipe 11. A brake lever 41 for actuating a hydraulic front wheel brake, a reservoir tank 42 for storing oil pressure transmitting fluid, and a handlebar switch 40 provided at the base of the steering handlebar 10, are disposed with respect to a handlebar holder 43 for fixing the steering handlebar 10 to the top bridge 7. Note that a shape and a structure of the handlebar holder 43 or the like can be variously deformed.

The second pipe portions 28b of the hanger frames 28 extend downward from the lower portions of the lower frames 13. The radiator stay 29 for supporting the radiator 4 is fixed to the lower portions of the second pipe portions 28b. A radiator cap 4b is disposed on a right upper portion of the radiator 4 in the vehicle width direction.

As has been previously described, the handlebar lock device according to the present invention prohibits the swinging motion of the front wheel steering mechanism A by using either the first lock mechanism portion 50 or the second lock mechanism portion 60. The lock mechanism portions 50, 60 respectively include the lock pins configured to protrude/retract, the actuators such as solenoids for driving the lock pins, and the wireless communication portions for receiving the driving signal from the portable wireless key. With this configuration, the lock pins can protrude/retract by manipulating the portable wireless key by an occupant, and the handlebar can be locked and unlocked. The first lock mechanism portion 50 and the second lock mechanism portion 60 have a difference in an arrangement position and an attachment structure, and have no difference in an internal structure, a motion mode and the like. An appearance configuration of each of the first lock mechanism portion 50 and the second lock mechanism portion 60 can be variously deformed.

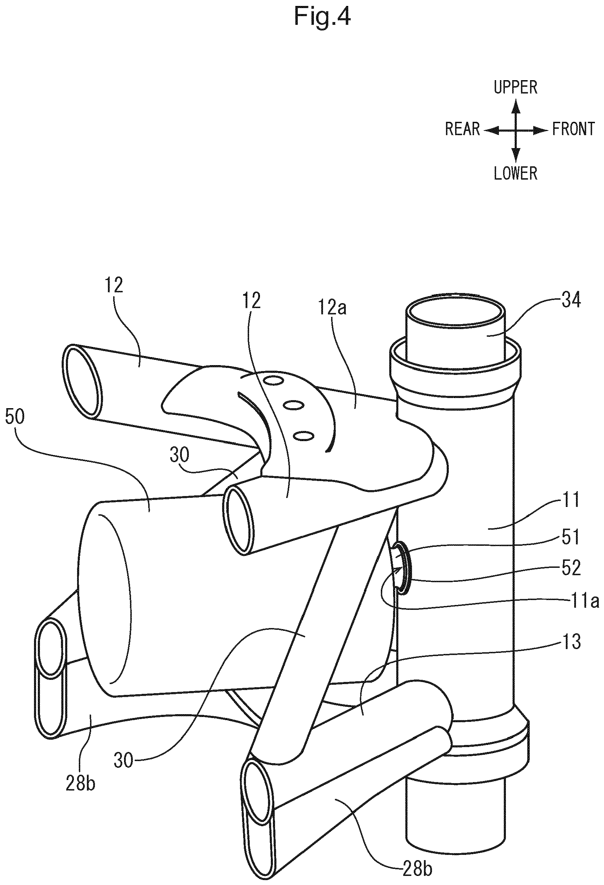

The first lock mechanism portion 50 is disposed behind the head pipe 11 and between the upper frames 12 and the lower frames 13 extending rearward of the vehicle body from the head pipe 11. The first lock mechanism portion 50 prohibits the swinging motion of the front wheel steering mechanism A by engaging a lock pin (see Fig. 4) penetrating through the head pipe 11 with the steering stem 34.

Meanwhile, the second lock mechanism portion 60 is disposed in a position located behind the head pipe 11 and above the radiator 4. The second lock mechanism portion 60 is supported by the radiator stay 29. The second lock mechanism portion 60 prohibits the swinging motion of the front wheel steering mechanism A by engaging the lock pin driven by the actuator with a rear end of the bottom bridge 8.

Fig. 4 is a perspective view showing an arrangement structure of the first lock mechanism portion 50. For the sake of convenience of explanation, the drawing shows such a state that the rear sides of the upper frames 12 and the lower frames 13 are omitted, and also the top bridge 7 and the bottom bridge 8 are removed from the steering stem 34. Also, the stay or the like for fixing the first lock mechanism portion 50 to the head pipe 11 is unillustrated. A gusset plate 12a for enhancing coupling rigidity by coupling the right and left upper frames 12 to each other is welded to the upper surfaces of the right and left upper frames 12. The first lock mechanism portion 50 is disposed in a position located behind the head pipe 11 and between the upper frames 12 and the lower frames 13. Also, the above-described position is a position sandwiched between the right and left connecting pipes 30.

With this arrangement, the first lock mechanism portion 50 can be protected from the outside, and also can be less likely visually recognized from the outside. Also, an outer side of the head pipe 11 in the vehicle width direction is covered with the side cowls 27 (see Fig. 1). For this reason, it becomes more difficult to visually recognize the first lock mechanism portion 50, and the first lock mechanism portion 50 can be prevented from being accessed by a third party. Further, the wireless communication portion is provided integrally with the first lock mechanism portion 50. As a result, in comparison with such a structure that the lock mechanism portion and the wireless communication portion are provided separately from each other, the degree of freedom in layout of the vehicle body can be increased while suppressing an increase in the arrangement space, and also the assemblability and maintainability can be improved. The above-described arrangement is superior in terms of effective use of a space as a possible dead space located behind the head pipe 11, and also free of influence on a capacity of the fuel tank 14.

A lock pin 51 of the first lock mechanism portion 50 is configured to be engaged with the steering stem 34 through the head pipe 11. An annular seal member 52 formed of rubber or the like is attached to a periphery of a through-hole 11a formed in a rear surface of the head pipe 11.

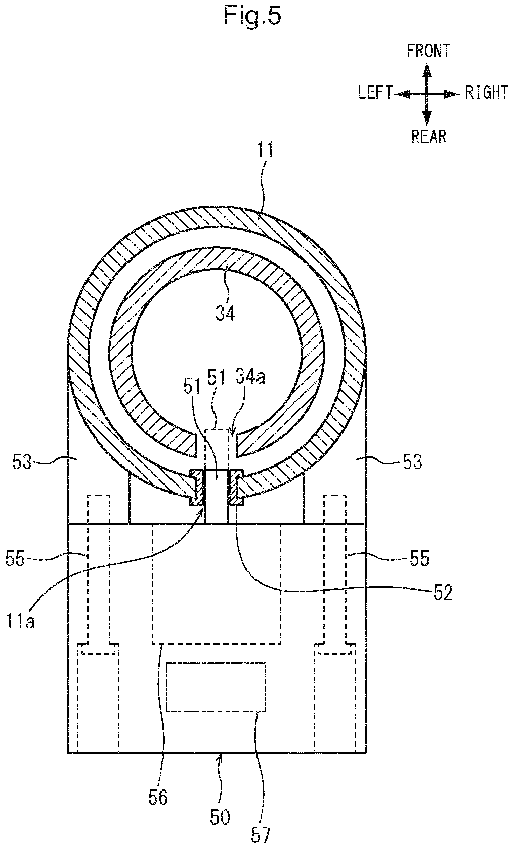

Fig. 5 is a plan view of a partial cross section showing a fixing structure for the first lock mechanism portion 50. As has been previously described, the first lock mechanism portion 50 includes an actuator 56 configured with the solenoid or the like, and a wireless communication portion 57 including a transmitting and receiving antenna, a driving circuit or the like. An outer shell of the first lock mechanism portion 50 can be formed of metal, synthetic resin or the like.

A contact surface between the lock pin 51 and the seal member 52 is configured to obtain waterproof property to smoothly slide the lock pin 51 and also to prevent intrusion of water or the like into the head pipe 11. A tip end of the lock pin 51 is located in a position not protruding from the seal member 52 with the handlebar unlocked, and is inserted into a through-hole 34a formed in the steering stem 34 with the handlebar locked.

The first lock mechanism portion 50 is fixed in such a manner that fastening members 55 such as screws are engaged with a pair of right and left stay members 53 extending rearward of the vehicle body from a position nearer a lateral side of the head pipe 11 formed of the steel pipe. For this reason, position accuracy of the first lock mechanism portion 50 with respect to the head pipe 11 can be increased, and the waterproof property and dimensional accuracy of a clearance of the through-hole 11a with respect to the seal member 52 and a peripheral portion of the lock pin 51 can be kept.

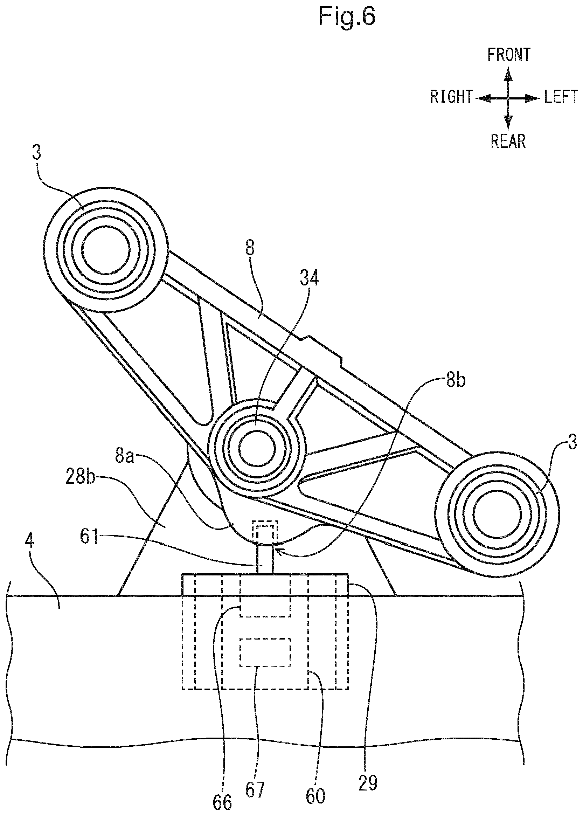

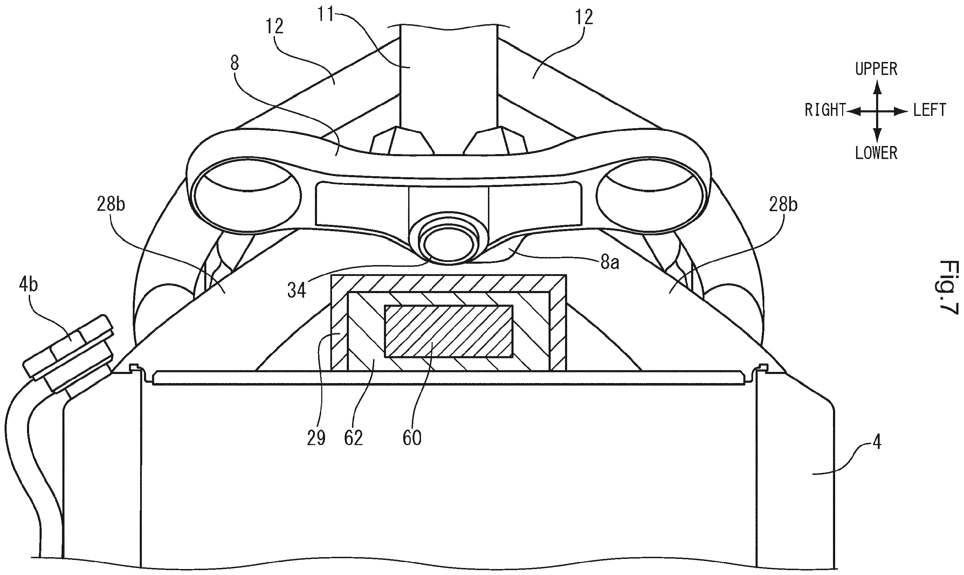

Fig. 6 is an arrangement configuration diagram of the second lock mechanism portion 60 when the motorcycle 1 is viewed from a lower surface. Also, Fig. 7 is an arrangement configuration diagram of the second lock mechanism portion 60 when the motorcycle 1 is viewed from a front surface. In the same way as the first lock mechanism portion 50, the second lock mechanism portion 60 includes a lock pin 61, an actuator 66 configured with the solenoid or the like, and a wireless communication portion 67 including the transmitting and receiving antenna, the driving circuit or the like. An outer shell of the second lock mechanism portion 60 can be formed of metal, synthetic resin or the like.

The second lock mechanism portion 60 is supported by the radiator stay 29 for fixing the radiator 4 to the second pipe portions 28b. A bulged portion 8a bulged rearward is provided in a position offset leftward in the vehicle width direction at the rear end of the bottom bridge 8. An engagement hole 8b for the lock pin 61 is formed in a rear end of the bulged portion 8a. With this configuration, the lock pin 61 is protruded with the front wheel steering mechanism A swung leftward of the vehicle body, so that the swinging motion of the front wheel steering mechanism A can be prohibited.

The second lock mechanism portion 60 is supported by the radiator stay 29 for fixing the radiator 4 to the second pipe portion 28b of the vehicle body frame 15. For this reason, the number of components can be prevented from being increased. The radiator stay 29 has a box shape of an approximately U-shaped cross section in a front view of the vehicle body, and the second lock mechanism portion 60 is arranged inside of the radiator stay 29. For this reason, upper, lower, right and left sides of the second lock mechanism portion 60 are surrounded by the radiator stay 29 and the radiator 4. As a result, the second lock mechanism portion 60 can be less likely visually recognized from the outside, and also the second lock mechanism portion 60 can be protected from the outside. Also, an outer side of the radiator 4 in the vehicle width direction is covered with the side cowl 27 (see Fig. 1). For this reason, it becomes more difficult to visually recognize the second lock mechanism portion 60, and the second lock mechanism portion 60 can be prevented from being accessed by the third party.

The second lock mechanism portion 60 is also provided integrally with the wireless communication portion. For this reason, in comparison with such a structure that the lock mechanism portion and the wireless communication portion are provided separately from each other, there are advantages that an increase in the arrangement space can be suppressed, so that the degree of freedom in layout of the vehicle body can be increased, and also the assemblability and maintainability can be improved. Also, the above-described arrangement is superior in terms of effective use of the space as the possible dead space located above the radiator 4, and also free of influence on the capacity of the fuel tank 14.

As shown in Fig. 7, the second lock mechanism portion 60 can be fixed to the radiator stay 29 with a supporting member 62 for covering a periphery of the second lock mechanism portion 60 interposed between the radiator stay 29 and the second lock mechanism portion 60. The supporting member 62 is formed of synthetic resin or the like having heat insulation properties. Thereby, the second lock mechanism portion 60 including a plurality of electronic components can be protected from the heat generated from the radiator 4.

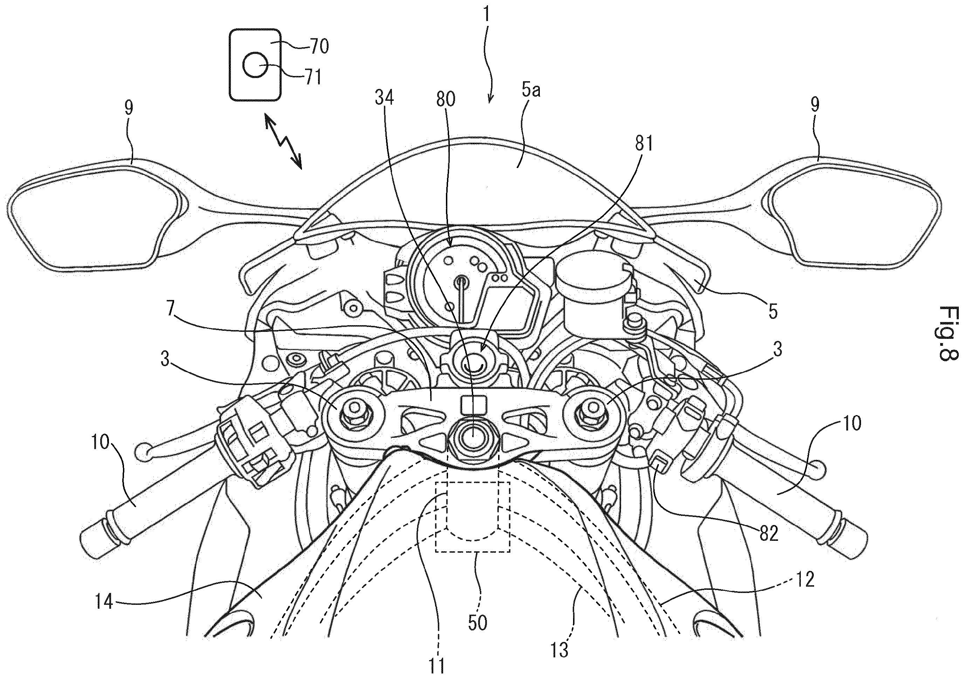

Fig. 8 is an arrangement configuration diagram around the top bridge 7 when viewed from a point of view of a rider. A meter device 80 as a part of the vehicle body front device 6 is arranged behind the front cowl 5 having a windbreak screen 5a. A pressing type power supply switch 81 is provided between the meter device 80 and the top bridge 7, and a starter switch 82 is provided with respect to the steering handlebar 10 on the right side in the vehicle width direction. The drawing shows the state of including the first lock mechanism portion 50 disposed behind the head pipe 11.

As has been previously described, the lock mechanism portions 50, 60 are respectively configured to lock and unlock the handlebar lock device by allowing the lock pins 51, 61 to protrude/retract by manipulation of the portable wireless key 70. Both the first lock mechanism portion 50 and the second lock mechanism portion 60 are arranged in positions located nearer the front side of the vehicle body accessed by the rider. For this reason, excellent communication state with the portable wireless key 70 can be easily ensured. The motion mode of the handlebar lock device will be described below with the first lock mechanism portion 50 as a representative example.

When a lock button 71 of the portable wireless key 70 is manipulated with the handlebar lock device locked, the lock pin 51 is inserted, and the handlebar lock device is made to switch into an unlocked state. When the handlebar lock device is put in the unlocked state, power supply can be operated ON by manipulation of pressing the power supply switch 81, and the engine E is started by manipulating the starter switch 82 with the power supply operated ON.

Then, when the power supply switch 81 is manipulated in a pressing manner with the engine E operated, the engine E is stopped, and also the state is made to switch into the power supply OFF. With the power supply OFF, when the steering handlebar 10 is swung leftward to the swinging limit, and the lock button 71 of the portable wireless key 70 is manipulated, the lock pin 51 is protruded, and the handlebar lock device is made to switch into a locked state.

Note that the shape and configuration of the vehicle body frame and the front wheel steering mechanism, the shape of the head pipe and the steering stem, the shape of the radiator stay, the shape and configuration of the lock mechanism portion, the fixing structure for the lock mechanism portion to the side of the vehicle body, or the like, are not limited to the above-described embodiment, and various design changes can be made thereto. The handlebar lock device of the saddled vehicle according to the present invention is not limited to the motorcycles, and can be applied to three-wheeled or four-wheeled saddled vehicles.

### Explanations of numerals

1 ... Motorcycle (Saddled vehicle)
3 ... Front fork
7 ... Top bridge
8 ... Bottom bridge
11 ... Head pipe
11a ... Through-hole
12 ... Upper frame
13 ... Lower frame
15 ... Vehicle body frame
29 ... Radiator stay
34 ... Steering stem
50 ... First lock mechanism portion (Lock mechanism portion)
60 ... Second lock mechanism portion (Lock mechanism portion)
51, 61 ... Lock pin
55, 66 ... Actuator
57, 67 ... Wireless communication portion
53 ... Stay member
70 ... Portable wireless key
A ... Front wheel steering mechanism

## Claims

1. A handlebar lock device of a saddled vehicle applied to the saddled vehicle (1), the saddled vehicle (1) being configured in such a manner that a front wheel steering mechanism (A) including a front fork (3), and a top bridge (7) and a bottom bridge (8) respectively supporting the front fork (3) is swingably journaled to a head pipe (11) provided at a front end of a vehicle body frame (15),
wherein a lock mechanism portion (50) having a lock pin (51) driven by an actuator (56) is arranged in a position behind the head pipe (11) and between an upper frame (12) and a lower frame (13) respectively extending rearward of a vehicle body from the head pipe (11).

2. The handlebar lock device of a saddled vehicle according to claim 1, wherein the lock mechanism portion (50) is provided integrally with a radio communication portion (57) communicating over a radio between a portable wireless key (70) and the radio communication portion (57).

3. The handlebar lock device of a saddled vehicle according to claim 2, wherein the handlebar lock device is configured to be locked and unlocked by manipulating the portable wireless key (70) in order to drive the lock pin (51) of the lock mechanism portion (50).

4. The handlebar lock device of a saddled vehicle according to any one of claims 1 to 3,
wherein the top bridge (7) and the bottom bridge (8) are respectively fixed to a steering stem (34),
the head pipe (11) swingably pivotally supports the steering stem (34), and
the lock pin (51) protruding from the lock mechanism portion (50) is configured to be engaged with the steering stem (34) through a through-hole (11a) formed in the head pipe (11) in order to prohibit swinging motion of the front wheel steering mechanism (A).

5. The handlebar lock device of a saddled vehicle according to any one of claims 1 to 4, wherein the lock mechanism portion (50) is supported by a pair of right and left stay members (53) extending rearward of the vehicle body from a position nearer a lateral side of the head pipe (11).

6. The handlebar lock device of a saddled vehicle according to claim 4, wherein a seal member (52) is provided to cover a periphery of the through-hole (11a).
